# EUROPEAN PATENT SPECIFICATION

(11) **EP 4 236 083 B1**
(45) Date of publication and mention of the grant of the patent: **31.12.2025**
(21) Application number: 22159135.7
(22) Date of filing: 28.02.2022
(51) Int. Cl.: H04B 1/00, H04W 84/18, H04B 1/38

(54) **A SYSTEM OF A CHANNEL MONITORING IN THE MF AND HF FREQUENCY RANGE, AND A METHOD FOR A CHANNEL MONITORING IN THE MF AND HF FREQUENCY RANGE**
SYSTEM EINER KANALÜBERWACHUNG IM MF-UND HF-FREQUENZBEREICH UND VERFAHREN FÜR EINE KANALÜBERWACHUNG IM MF UND HF-FREQUENZBEREICH
SYSTÈME DE SURVEILLANCE DE CANAL DANS LA GAMME DE FRÉQUENCES MF ET HF, ET PROCÉDÉ DE SURVEILLANCE DE CANAL DANS LA GAMME DE FRÉQUENCES MF ET HF

(43) Date of publication of application: 30.08.2023
(73) Proprietor: Rohde & Schwarz GmbH & Co. KG, 81671 München (DE)
(72) Inventor: BAYER, Stefan, 80687 Munich (DE)
(74) Representative: Novagraaf Group

(56) References cited:
- "Implementing Software Defined Radio", 21 July 2012, SPRINGER NEW YORK, New York, NY, ISBN: 978-1-4419-9332-8, article EUGENE GRAYVER: "SDR Standardization", pages: 97 - 129, XP055422688, DOI: 10.1007/978-1-4419-9332-8_7
- LI KE ET AL: "Security Mechanisms to Defend against New Attacks on Software-Defined Radio", 2018 INTERNATIONAL CONFERENCE ON COMPUTING, NETWORKING AND COMMUNICATIONS (ICNC), IEEE, 5 March 2018 (2018-03-05), pages 537 - 541, XP033361166, DOI: 10.1109/ICCNC.2018.8390381
- TODOR COOKLEV ET AL: "The VITA 49 Analog RF-Digital Interface", IEEE CIRCUITS AND SYSTEMS MAGAZINE, IEEE SERVICE CENTER, NEW YORK, NY, US, vol. 12, no. 4, 1 January 2012 (2012-01-01), pages 21 - 32, XP011474141, ISSN: 1531-636X, DOI: 10.1109/MCAS.2012.2221520

## Description

### FIELD OF THE INVENTION

The present invention relates to a system of a channel monitoring in a MF and HF frequency range. The invention further relates to a method for a channel monitoring in the MF and HF frequency range.

### TECHNICAL BACKGROUND

A connection establishment in the wireless communication has been performed using a sequential scanning on a plurality of communication channel. According to this manner, the procedure of establishing the connection takes too much time. In order to solve the problem of slow connection establishment, a broadband receiver has been developed. Especially, the broadband receiver has outstanding advantage in medium frequency (MF) and high frequency (HF) radio connections.

However, using the broadband receiver in the actual communication has the problem that sensitivity and interference immunity is degraded. Therefore, it is desired to develop a method for enhancing a reliability of the communication system with increased speed of connection establishment.

Non-patent Literature "SDR Standardization" in "Implementing Software Defined Radio" published on July 21, 2012, provides a particular idea to implement the waveform in relatively hardware-independent environment.

Non-patent Literature "Security Mechanisms to Defend against New Attacks on Software-Defined Radio", published by IEEE on March 5, 2018, provides a software-defined radio with flexible use of spectrum.

Non-patent Literature "The VITA 49 Analog RF-Digital Interface", published by IEEE on January 1, 2012, provides an implementation of a digital hardware for examining analog RF and digital sections of radio.

### SUMMARY OF THE INVENTION

Against this background, there is the need to provide a channel monitoring on a plurality of frequencies that is performed after a connection is established.

Accordingly, the present invention provides a channel monitoring system in a MF/HF frequency range, a channel monitoring system and/or a method for channel monitoring in the MF/HF frequency range having the features of the independent claims.

According to a first aspect of the present invention, a channel monitoring system comprises: at least one channel monitoring device comprising an input terminal for receiving a RF signal wherein the channel monitoring device is configured to receive the RF signal, to monitor simultaneously a plurality of channels of the received RF signal that are existing in a target frequency range, to detect an incoming signal on at least one target channel in the target frequency range and to generate a control signal indicating the at least one target channel when the incoming signal is detected; and at least one radio device which is coupled to the channel monitoring device, wherein the at least one radio device is configured to receive via its input terminal the control signal generated by the at least one channel monitoring device and to listen to the at least one indicated target channel to receive subsequent RF signals of the incoming signal, when the control signal is received, wherein a transmission interface for connecting the at least one channel monitoring device with the at least one radio device which is configured to transmit the control signal to the radio device using a software radio protocol, as defined by independent claim 1.

The channel monitoring device may be a broadband receiver (for example, a monitoring receiver) that is capable of monitoring a plurality of channel in a wideband in parallel. The channel monitoring device is configured to scan all channels in a target frequency range defined within the HF frequency range at the same time. The target frequency can be adjusted. A bandwidth of the target frequency range may be between 1.5MHz to 30HMz. The radio device may be a wireless device including a transceiver that receives and transmits a radio signal. The radio device may be a software-defined device that deals with digital signal. The radio device has a narrower operating frequency range compared to the channel monitoring device. The radio device is for military or civil use, which requires to cover broadband communication.

The channel monitoring device includes at least one transmission interface. The transmission interface is, for example, digital I/Q interface. The transmission interface for connecting the at least one channel monitoring device with the at least one radio device which is configured to transmit the control signal to the radio device using a software radio protocol. The radio device includes at least one interface. The interface of the radio device is, for example, a Giga-bit ethernet interface.

The present invention is based on the idea to monitor a plurality of channels in a wide bandwidth in parallel, and to initiate receiving incoming signal as soon as possible. According to the first aspect of the present invention, the radio device listens to the target channel as soon as receive the control signal from the channel monitoring device, even before synchronization. Furthermore, the channel monitoring device may keep monitoring a plurality of channels in the MF/HF frequency range even after the connection with a network is established. In addition, it is also main issue to avoid heavy load of data to be transmitted to another device.

Advantageous configurations and developments emerge from the further dependent claims and from the description with reference to the figures of the drawings.

According to an embodiment, the channel monitoring system comprises a plurality of channel monitoring devices which are assigned and coupled one single radio device, wherein the plurality of channel monitoring devices are preferably configured to receive RF signals having different bandwidths.

According to an embodiment, the incoming signal includes at least one of signal data and a preamble. The preamble includes synchronization information. Alternatively, the preamble can be detected by the channel monitoring device separately from the incoming signal. The preamble is included in the control signal transmitted by the channel monitoring device to the radio device. Alternatively, the preamble can be delivered to the radio device separately from the control signal. The channel monitoring device is configured to scan the preamble because incoming signals are very close or under of the noise limit.

According to an embodiment, the preamble includes synchronization information. For example, the preamble includes information for start of transmission with a robust coding. Therefore, it might be necessary to decode the preamble to acquire the information for start of transmission.

According to an embodiment, the method further includes extracting, by the radio device, the synchronization information included in the preamble while receiving the subsequent signal. Therefore, the reception of incoming signal (or subsequent signal) by the radio device can be initiated even before synchronization. More specifically, the radio device initiates receiving subsequent signal when the radio device receives the control signal from the channel monitoring device. The synchronization information can be used to transmit outgoing data by the radio device. That is, the radio device transmits the outgoing signal to a network based on the synchronization information.

According to an embodiment, a bandwidth of the target frequency range is between 1.5MHz to 30MHz (more preferably 3MHz to 30MHz). Therefore, such a wide bandwidth, for example 30MHz, can be monitored by one and the same the channel monitoring device at the same time.

According to an embodiment, the channel monitoring device includes a digital I/Q interface for communication with the radio device. The channel monitoring device is configured to generate I/Q signal to transmit the control signal efficiently. I/Q signaling is an alternative method of describing the magnitude and phase data of a signal. I/Q representation provides an effective way to visualize and measure the quality of modulation. The communication between the channel monitoring device and the radio device can be performed using a software radio protocol. The protocol of the software defined radio is a very efficient protocol to execute digital signal processing.

According to an embodiment, the radio device is further configured to establishing a connection with a network before the channel monitoring device starts monitoring the target frequency range. Therefore, the channel monitoring device can keep monitoring the channels even after the connection is established. The establishment of the connection may be an automatic link establishment (ALE).

According to an embodiment, the channel monitoring device is a part of the radio device. That is, the channel monitoring device is located in the radio device. Therefore, the channel monitoring device and the radio device can be implemented as a single device.

According to a second aspect of the present invention, a channel monitoring system comprises: at least one channel monitoring device comprising an input terminal for receiving a RF signal wherein the channel monitoring device is configured to receive the RF signal, to monitor simultaneously a plurality of channels of the received RF signal that are existing in a target frequency range, to receive incoming signal on at least one target channel in the target frequency range, and to generate a data packet to deliver the incoming signal when the incoming signal is detected; and a radio device which is coupled to the channel monitoring device, wherein the radio device is configured to receive via its input terminal the data packet, and to extract the incoming signal included in the data packet when the data packet is received, wherein a transmission interface for connecting the at least one channel monitoring device with the at least one radio device which is configured to transmit the data packet to the radio device using a software defined radio, as defined by independent claim 11.

The channel monitoring device may be a broadband receiver (for example, a monitoring receiver) that is capable of monitoring a plurality of channel in a wideband in parallel. The channel monitoring device is configured to scan all channels in a target frequency range defined within the HF frequency range at the same time. The target frequency can be adjusted. A bandwidth of the target frequency range may be between 1.5MHz to 30HMz. The radio device may be a wireless device including a transceiver that receives and transmits a radio signal. The radio device may be a software-defined device that deals with digital signal. The radio device has a narrower operating frequency range compared to the channel monitoring device. The radio device is for military or civil use, which requires to cover broadband communication.

The channel monitoring device may include at least one transmission interface. The transmission interface is, for example, digital I/Q interface. The transmission interface for connecting the at least one channel monitoring device with the at least one radio device which is configured to transmit the data packet to the radio device uses software radio. The radio device can be connected to an interface for communication with the channel monitoring device. The radio device may include at least one interface. The interface of the channel monitoring device is, for example, Giga-bit ethernet interface.

The present invention is based on the idea to monitor all channels in a wide bandwidth in parallel, and to initiate receiving incoming signal as soon as possible. According to the second aspect of the present invention, the channel monitoring device keeps receiving the subsequent signal when an incoming signal is detected. Furthermore, the channel monitoring device may keep monitoring a plurality of channels in the HF frequency range even after the connection with a network is established. In addition, it is also main issue to avoid heavy load of data to be transmitted to another device.

Advantageous configurations and developments emerge from the further dependent claims and from the description with reference to the figures of the drawings.

According to an embodiment, wherein the channel monitoring system comprises a plurality of channel monitoring devices which are assigned and coupled one single radio device, wherein the plurality of channel monitoring devices are preferably configured to receive RF signals having different bandwidths.

According to an embodiment, the radio device is further configured to receive a preamble which includes synchronization information, and transmit outgoing signal based on the synchronization information included in the preamble. In case the preamble is received in encoded form, the radio device needs to decode the preamble. It goes without saying that the information included in the preamble is suitably encrypted. Since the channel monitoring device is configured to keep listening to the target channel, even before synchronization is completed incoming signal is already being delivered to the radio device.

According to an embodiment, the channel monitoring device includes a digital I/Q interface for communication with the radio device. The channel monitoring device is configured to generate I/Q signal to forward the data packet including incoming signal efficiently. I/Q signaling is an alternative method of describing the magnitude and phase data of a signal. I/Q representation provides an effective way to visualize and measure the quality of modulation. The communication between the channel monitoring device and the radio device can be performed using a software protocol.

According to an embodiment, the data packet is a digital down converted (DDC) signal. The particular benefit is that the size of the data packet can be reduced. DDC converts a digitized, band-limited signal to a lower frequency signal at a lower sampling rate in order to simplify the subsequent radio stages. The process can preserve all the information in the frequency band of interest of the original signal.

According to an embodiment, the radio device is further configured to establish a connection with a network before the channel monitoring device starts monitoring the target frequency range. Therefore, the channel monitoring device can keep monitoring the channels even after the connection is established. The establishment of the connection may be an automatic link establishment (ALE).

According to an embodiment, the channel monitoring device is a part of the radio device. That is, the channel monitoring device is located in the radio device. Therefore, the channel monitoring device and the radio device can be implemented as a single device.

According to a third aspect of the present invention, a method for channel monitoring comprises: providing at least one channel monitoring device comprising an input terminal for receiving a RF signal; monitoring, by the channel monitoring device, simultaneously a plurality of channels of the received RF signal that are existing in a target frequency range; detecting, by the channel monitoring device, incoming signal on at least one target channel in the target frequency range; generating, by the channel monitoring device, a control signal indicating the at least one target channel when the incoming signal is detected; providing at least one radio device which is coupled to the channel monitoring device; receiving, by the radio device, via its input terminal the control signal generated by the channel monitoring device using a software radio protocol; and listening, by the radio device, to the at least one indicated target channel to receive subsequent signal of the incoming signal, when the control signal is received, as defined by independent claim 15.

It is also possible that a method for channel monitoring comprises: providing at least one channel monitoring device comprising an input terminal for receiving a RF signal; monitoring, by the channel monitoring device, simultaneously a plurality of channels of the received RF signal that are existing in a target frequency range; receiving, by the channel monitoring device, incoming signal on at least one target channel in the target frequency range; generating, by the channel monitoring device, a data packet to deliver the incoming signal when the incoming signal is detected; providing at least one radio device which is coupled to the channel monitoring device; receiving, by the radio device, via its input terminal the data packet using software protocol; and extract, by the radio device, the incoming signal included in the data packet when the data packet is received.

Where appropriate, the above-mentioned configurations and developments can be combined in any manner. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

### CONTENT OF THE DRAWINGS

The present invention is described in greater detail in the following on the basis of the embodiments shown in the schematic figures of the drawings, in which:
- Fig. 1: a flow chart illustrating a method of a channel monitoring according to one aspect of the present invention;
- Fig. 2: a flow chart illustrating a method of a channel monitoring according to one aspect of the present invention;
- Fig. 3: a block diagram illustrating a channel monitoring system according to one aspect of the present invention; and
- Fig. 4: a block diagram illustrating a channel monitoring system according to one aspect of the present invention.
- Fig. 5: a block diagram illustrating a channel monitoring system according to one aspect of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

### DESCRIPTION OF EMBODIMENTS

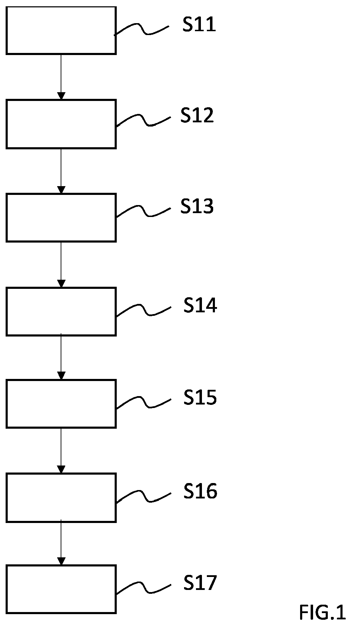

Fig. 1 shows a flow chart illustrating a method of a channel monitoring according to one aspect of the present invention.

In a first step S11, a channel monitoring device is provided. The channel monitoring device comprises an input terminal for receiving a RF signal. The channel monitoring device may be a broadband receiver (for example, a monitoring receiver) that is capable of monitoring a plurality of channel in a wideband in parallel. The channel monitoring device is configured to scan all channels in a target frequency range defined within the HF frequency range at the same time. The target frequency can be adjusted. A bandwidth of the target frequency range may be between 3MHz to 30HMz (for example, 30MHz).

The channel monitoring system comprises a plurality of channel monitoring devices which are assigned and coupled one single radio device, wherein the plurality of channel monitoring devices are preferably configured to receive RF signals having different bandwidths. The different bandwidths may be either different widths of the passband or different range of frequency.

In a second step S12, the channel monitoring device monitors simultaneously a plurality of channels in a target frequency range. The channel monitoring device may need a broadband antenna.

The channel monitoring device is capable of scanning at high speed, for example up to 47GHz/s.

By monitoring a plurality of channels in the wide bandwidth frequency range in parallel, time spent in scanning several frequencies can be reduced.

The second step S12 may be performed after a connection is established between the radio device and a network. The radio device may be a wireless device including a transceiver that receives and transmits a radio signal. The radio device may be a software-defined device that deals with digital signal. The radio device has a narrower operating frequency range compared to the channel monitoring device. The radio device is for military or civil use, which requires to cover broadband communication. The channel monitoring device may be located in the radio device, as a part of the radio device. Therefore, the channel monitoring device and the radio device can be implemented as a single device.

The establishment of the connection may be an automatic link establishment (ALE), such as ALE2G, ALE3G, ALE4G or any future ALE-standards. ALE is the de-facto worldwide standard for initiating and sustaining communications using High Frequency radio. HF radio conveys signals via ionospheric propagation, a constantly changing medium. Each radio ALE station uses a call sign or address in the ALE controller. When not actively in communication with another station, each HF transceiver constantly scans through a list of frequencies, listening for its call sign. To reach a specific station, the caller simply enters the call sign just like dialing a phone number. The ALE controller selects the best available frequency and sends out brief digital selective calling signals containing the call signs. When the distant scanning station detects the first few characters of its call sign, it stops scanning and stays on that frequency. The two stations' ALE controllers automatically handshake to confirm that a link is established and they are ready to communicate.

In a third step S13, the channel monitoring device detects incoming signal on at least one target channel in the target frequency range. The channel monitoring device is configured to determine that incoming signal exists in at least one target channel.

The channel monitoring device also scans a preamble, because the signals detected by the channel monitoring device is very close to or under noise limit. The preamble includes synchronization information. The preamble may be included in the detected incoming signal or the preamble may be detected separately from the incoming signal.

In a fourth step S14, the channel monitoring device generates a control signal to control a radio device to listen to the target channel. The control signal includes an indication indicative of the target channel.

The channel monitoring device includes an interface for communication with the radio device. The interface of the channel monitoring device is a digital I/Q interface. The channel monitoring device generates I/Q signal as the control signal. I/Q signaling refers to the use of two sinusoids that have the same frequency and a relative phase shift of 90°. I/Q signaling is an alternative method of describing the magnitude and phase data of a signal. I/Q representation provides an effective way to visualize and measure the quality of modulation. Amplitude, phase, and frequency modulation can be performed by summing amplitude-modulated I/Q signals. Quadrature modulation refers to modulation that involves I/Q signals. Quadrature phase shift keying can be accomplished by adding I and Q carriers that have been individually multiplied, in accordance with the incoming digital data, by +1 or -1.

The channel monitoring device may further include a second interface which enables a connection to another hardware for external signal processing such as preamble detection, demodulation, crypto, etc.

The channel monitoring device supports direct digital synthesis (DDS). DDS is a method of producing an analog waveform-usually a sine wave-by generating a time-varying signal in digital form and then performing a digital-to-analog conversion. Because operations within a DDS device are primarily digital, it can offer fast switching between output frequencies, fine frequency resolution, and operation over a broad spectrum of frequencies. With advances in design and process technology, today's DDS devices are very compact and draw little power.

The control signal includes the preamble. The control signal may include not only the preamble, but also the incoming data signal.

In a fifth step, at least one radio device is provided. The radio device is coupled to the at least one channel monitoring device.

In a sixth step, the radio device receives via its input terminal the control signal generated by the channel monitoring device using software radio protocol. More specifically, the channel monitoring device transmits the control signal to the radio device through a software radio protocol. The software radio protocol may be implemented through a fiber connection or a wireless connection.

The communication between the channel monitoring device and the radio device is performed using a software radio protocol, for example "VITA 49". In this description, the device that supports this software radio protocol, for example the channel monitoring device and the radio device, is also referred to software radio device. Software radio device attempting to locate, identify and monitor a wide range of unknown signals can extract many useful facts from this software radio protocol Information Stream. These can include the azimuth and elevation of a directional antenna, the reference power level of the RF signal, the bandwidth and tuning frequencies of the RF tuner and DDC, the sample rate of the ADC, the frequency accuracy RF tuner and sample clock, a signal ID tag, and the time stamp.

In this software radio protocol, the signal data packet is exchanged between the software radio devices that not only supports digitized IF signals, but also baseband signals, broadband RF signals, and even spectral data. Signal Data Packets are backwards compatible with IF Data Packets, while new identifier bits specify the data type.

In addition, the software radio protocol is configured to adopt another packet class called control packets, which allow the software radio device to deliver operating parameters to each element using standardized fields and formats. This supports a consistent control interface across a wide class of hardware ranging from antenna positioning systems to transmit power amplifiers.

In response to each control packet, they not only report current operating parameters but also highlight any discrepancies or problems in executing the new commands. This comprehensive and complimentary control/status protocol of the radio software device provides an essential function for cognitive radio, adaptive spectral management, electronic counter measures and other critical applications.

In a seventh step S17, the radio device listens to the at least one target channel to receive subsequent signal of the incoming signal, when the control signal is received. More specifically, the radio device receives the control signal, and recognizes the target channel on which the incoming signal is detected.

Then, the radio device initiates listening to the target channel according to the control signal. Even when the synchronization is not yet performed, the radio device can lock in at the target channel and hear for more information on the target channel. Thus, the radio device may extracts the synchronization information included in the preamble while receiving the subsequent signal. The radio transmits outgoing signal to a network based on the synchronization information.

According to the embodiments, it enables a very fast lock in time less than 100ms. In contrast, a pre-existing radio device takes 8 to 20 seconds for one link establishment. According to the existing radio device, while performing synchronization via GPS, the frequency changes for example every 1.33 seconds. However, it is understood that the synchronization may also be different and in particular faster for this or other link establishment standards, e.g. 200msec or less.

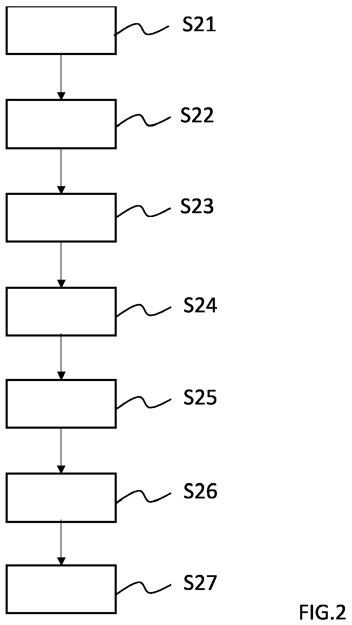

Fig. 2 shows a flow chart illustrating a method of a channel monitoring according to one aspect of the present invention.

The method described with Fig. 2 is identical to the method described with Fig. 1, except for the fact that the channel monitoring device acts as a receiver. Therefore, in this method, the radio device only transmits data signal and receives signal indirectly via the channel monitoring device.

In a first step S21, a channel monitoring device is provided. The channel monitoring device comprises an input terminal for receiving a RF signal. The channel monitoring device may be a broadband receiver (for example, a monitoring receiver) that is capable of monitoring a plurality of channel in a wideband in parallel. The channel monitoring device is configured to scan all channels in a target frequency range defined within the HF frequency range at the same time. The target frequency can be adjusted. A bandwidth of the target frequency range may be between 3MHz to 30HMz (for example, 30MHz).

In a second step S22, the channel monitoring device monitors simultaneously a plurality of channels existing in a target frequency range.

In a third step S23, the channel monitoring device receives incoming signal on at least one target channel in the target frequency range. When the channel monitoring device detects incoming signal on a particular target channel, then the channel monitoring device keeps receiving the subsequent signal of the incoming signal. In this manner, the reception of incoming data can be initiated immediately.

In a fourth step S24, the channel monitoring device generates a data packet to deliver the incoming signal when the incoming signal is received.

In a fifth step S25, at least one radio device is provided. The radio device is coupled to the channel monitoring device.

In a sixth step S26, the radio device receives via its input terminal the data packet including the incoming signal using a software radio protocol. The data packet includes not only the incoming signal but also the preamble.

In a seventh step S27, the radio device extracts the incoming signal included in the data packet when the data packet is received.

Apart from that the channel monitoring device acts as a receiver, the operations of channel monitoring device and the radio device, and communication between the channel monitoring device and the radio device described with Fig. 1 apply to this aspect of the present invention.

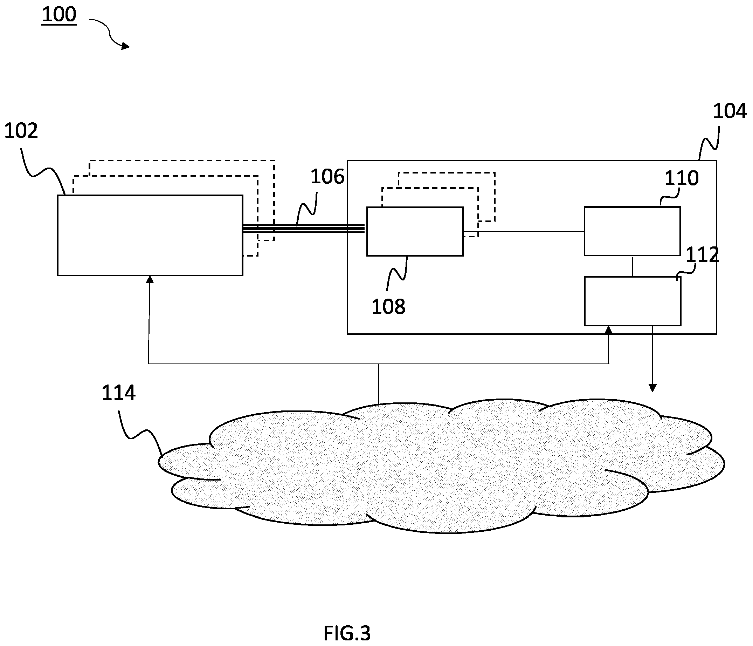

Fig. 3 is a block diagram illustrating a channel monitoring system according to one aspect of the present invention.

The channel monitoring system 100 is to perform the method described with Fig. 1.

As shown in Fig. 3, the channel monitoring system 100 includes at least one channel monitoring device 102, and a radio device 104. It goes without saying that the detailed descriptions about channel monitoring device 102 and radio device 104 provided with Fig. 1 can be also applied to Fig. 3.

The channel monitoring device 102 comprises an input terminal for receiving a RF signal. The channel monitoring device 102 is configured to receive the RF signal via its input terminal.

The channel monitoring device 102 is configured to monitor a target frequency range in parallel included in a HF frequency range in parallel. The channel monitoring device scans HF frequency range from a network 114.

The channel monitoring device 102 is configured to detect incoming signal on at least one of a plurality of target channels in the target frequency range.

The channel monitoring device 102 is configured to generate a control signal to tune a radio device to listen to the at least one target channel, and transmit the control signal to the radio device 104.

The channel monitoring device 102 includes an interface for communication with the radio device. The interface of the channel monitoring device is, for example, digital I/Q interface.

The channel monitoring device 102 includes a plurality of direct digital synthesizer (DDS). The capacity of the channel monitoring device 102 to monitor the HF frequency ranges is determined based on the number of DDS inside the channel monitoring device 102. For example, as the number of DDS in the channel monitoring device 102, the performance of the channel monitoring device 102 is degraded.

The channel monitoring device 102 performs communication connection 106 with radio device 104 using a software radio protocol. The communication connection 106 may be, for example, wireless connection or on fiber connection.

The radio device 104 is coupled to the at least one channel monitoring device 102, and includes an input terminal. The communication between the channel monitoring device 102 and the radio device 104 is performed using a software radio protocol.

The radio device 104 may be a software-defined device that deals with digital signal. The radio device 104 is for military or civil use, which requires to cover broadband communication.

The radio device 104 includes an interface (not shown), at least one link set up instance 108, a digital processing processor 110 and a frontend component 112.

The link set up instance 108 is configured to establish a connection with the network 114. The establishment of the connection may be an automatic link establishment (ALE). The link set up instance 108 receives a control signal from the channel monitoring device 102 through the at least one interface. The link set up instance decodes the control signal received from the channel monitoring device 102. The decoded control signal is delivered to digital signal processor 110. The capacity of the channel monitoring device 102 to monitor the HF frequency ranges is determined based on the number of the link set up instances 108. For example, as the number of link set up instance 108 gets bigger, the performance of the channel monitoring device 102 is degraded.

As the bandwidth of the target frequency band is adjusted to be wider, more sufficient power for the link set up instance 108 is required.

The digital signal processor 110 is configured to perform digital signal processing.

The frontend component 112 is configured to transmit and receive wireless signals to or from the network 114. The wireless signal is transmitted, for example at 24kHz or 48kHz.

The digital signal processor 110 is connected to the frontend component 112 for example via enhanced synchronous serial interface (ESSI). However, also other interface standards are possible.

According to the channel monitoring system 100 illustrated in Fig. 3, the channel monitoring device 102 performs scanning the channels, and instruct the radio device 104 to receive subsequent signal on the specific channel. Therefore, the radio device 104 transmits and receive the data signal.

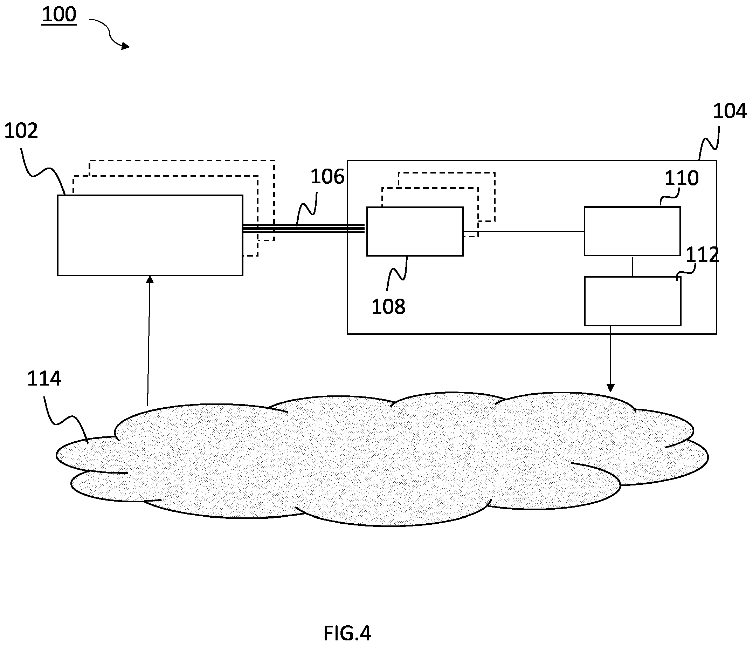

Fig. 4 is a block diagram illustrating a channel monitoring system according to one aspect of the present invention.

The channel monitoring system 100 illustrated in Fig. 4 is to perform the method described with Fig. 1.

As shown in Fig. 4, the channel monitoring system 100 includes at least one channel monitoring device 102 and a radio device 106. It goes without saying that the detailed descriptions about channel monitoring device 102 and radio device 104 provided with Fig. 1 can be also applied to Fig. 4, except for that the channel monitoring device acts as a receiver of the radio device in Fig. 4.

The channel monitoring device 102 is configured to monitor a target frequency range in parallel included in a HF frequency range in parallel. The channel monitoring device scans HF frequency range from a network 114.

The channel monitoring device 102 is configured to receive incoming signal on at least one of a plurality of target channels in the target frequency range. When incoming signal is detected, the channel monitoring device 102 keeps listening to the target channel to receive subsequent signal.

The channel monitoring device 102 is configured to scan a preamble from the network 114. The channel monitoring device 102 generates a data packet including the incoming signal and the preamble.

The channel monitoring device 102 delivers the data packet to the radio device 106 using a software radio protocol through the at least one interface.

The channel monitoring device 102 includes a plurality of direct digital synthesizer (DDS). The capacity of the channel monitoring device 102 to monitor the HF frequency ranges is determined based on the number of DDS inside the channel monitoring device 102. For example, as the number of DDS in the channel monitoring device 102, the performance of the channel monitoring device 102 is degraded.

At least one interface is included in the channel monitoring device 102, and at least one interface is included in the radio device 106, for example Giga-bit Ethernet interface.

The communication between the channel monitoring device 102 and the radio device 104 via the at least one interface is performed using a software radio protocol.

The radio device 104 is configured to extract the preamble included in the data packet, and transmit outgoing signal based on the synchronization information included in the preamble.

The radio device 104 includes at least one link set up instance 108, a digital processing processor 110 and a frontend component 112.

The link set up instance 108 is configured to establish a connection with the network 114. The establishment of the connection may be an automatic link establishment (ALE). The link set up instance 108 receives a data packet from the channel monitoring device 102 through the at least one interface 104. The link set up instance decodes the data packet received from the channel monitoring device 102. The decoded data packet is delivered to digital signal processor 110. The capacity of the channel monitoring device 102 to monitor the HF frequency ranges is determined based on the number of the link set up instances 108. For example, as the number of link set up instance 108 gets bigger, the performance of the channel monitoring device 102 is degraded.

As the bandwidth of the target frequency band is adjusted to be wider, more sufficient power for the link set up instance 108 is required.

The digital signal processor 110 is configured to perform digital signal processing.

The frontend component 112 is configured to transmit wireless signals to or from the network 114. The wireless signal is transmitted, for example at 24kHz or 48kHz.

The digital signal processor 110 is connected to the frontend component 112 via enhanced synchronous serial interface (ESSI).

According to the channel monitoring system 100 illustrated in Fig. 4, the channel monitoring device 102 performs scanning the channels, and then keep listening the specific channel. Therefore, the radio device 106 only transmits the data signal, and receives incoming signal indirectly via the channel monitoring device 102.

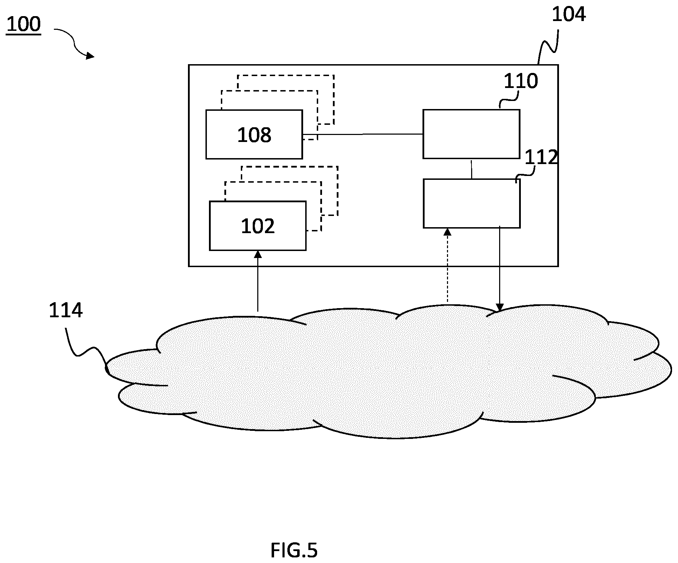

Fig. 5 is a block diagram illustrating a channel monitoring system according to one aspect of the present invention.

The channel monitoring system shown in Fig. 5 suggests another structure of the devices.

As shown in Fig. 5, the channel monitoring device 102 can be imbedded in the radio device 104. The communication connection (not shown) between the channel monitoring device 102 and the radio device 104 exists inside the radio device 104.

Although the present invention has been described in the above by way of preferred embodiments, it is not limited thereto, but rather can be modified in a wide range of ways. In particular, the invention can be changed or modified in various ways without deviating from the core of the invention, whose scope of protection is defined by the appended claims.

### LIST OF REFERENCE SIGNS

- 100: channel monitoring system
- 102: channel monitoring device
- 104: radio device
- 106: communication connection
- 108: link set up instance
- 110: digital signal processor
- 112: frontend component
- 114: network

- S11-S17: steps
- S21-S27: steps

## Claims

1. Channel monitoring system (100), the channel monitoring system (100) comprising:
at least one channel monitoring device (102) comprising an input terminal for receiving a RF signal wherein the channel monitoring device (102) is configured to receive the RF signal, to monitor simultaneously a plurality of channels of the received RF signal that are existing in a target frequency range, to detect an incoming signal on at least one target channel in the target frequency range and to generate a control signal indicating the at least one target channel when the incoming signal is detected; and
at least one radio device (104) which is coupled to the channel monitoring device (102), wherein the at least one radio device (104) is configured to receive via its input terminal the control signal generated by the at least one channel monitoring device (102) and to listen to the at least one indicated target channel to receive subsequent RF signals of the incoming signal, when the control signal is received,
wherein a transmission interface for connecting the at least one channel monitoring device (102) with the at least one radio device (104) which is configured to transmit the control signal to the radio device (104) using a software radio protocol.

2. Channel monitoring system according to claim 1, wherein the at least one channel monitoring device (102) is a MF and/or HF frequency receiver, in particular with a bandwidth of 1.5MHz to 30MHz.

3. Channel monitoring system according to any of the preceding claims, wherein at least one channel monitoring device (102) is part of the radio device (104).

4. Channel monitoring system according to any of the preceding claims, wherein the channel monitoring system (100) comprises a plurality of channel monitoring devices (102) which are assigned and coupled one single radio device (104), wherein the plurality of channel monitoring devices (102) are preferably configured to receive RF signals having different bandwidths.

5. Channel monitoring system according to any of the preceding claims, wherein the incoming signal includes a preamble which includes synchronization information, and wherein the control signal includes the preamble.

6. Channel monitoring system according to claim 5, wherein the radio device (104) is further configured to extract the synchronization information included in the preamble while receiving the subsequent signals.

7. Channel monitoring system according to any of the preceding claims, wherein the radio device (104) is further configured to transmit outgoing signals to a network based on the synchronization information.

8. Channel monitoring system according to any of the preceding claims, wherein a bandwidth of the target frequency range is between 1.5MHz to 30MHz and/or wherein the target frequency range is defined within a HF frequency range.

9. Channel monitoring system according to any of the preceding claims, wherein the at least one channel monitoring device (102) includes a digital I/Q interface for communication with the at least one radio device (104).

10. Channel monitoring system according to any of the preceding claims, wherein the radio device (104) is further configured to establish a connection with a network before the channel monitoring device (102) starts monitors the target frequency range.

11. Channel monitoring system (100), the channel monitoring system (100) comprising:
at least one channel monitoring device (102) comprising an input terminal for receiving a RF signal wherein the channel monitoring device (102) is configured to receive the RF signal, to monitor simultaneously a plurality of channels of the received RF signal that are existing in a target frequency range, to receive incoming signal on at least one target channel in the target frequency range, and to generate a data packet to deliver the incoming signal when the incoming signal is detected; and
a radio device (104) which is coupled to the channel monitoring device (102), wherein the radio device (104) is configured to receive via its input terminal the data packet, and to extract the incoming signal included in the data packet when the data packet is received,
wherein a transmission interface for connecting the at least one channel monitoring device (102) with the at least one radio device (104) which is configured to transmit the data packet to the radio device using a software radio protocol.

12. Channel monitoring system according to claim 11, wherein the at least one channel monitoring device is a MF and/or HF frequency receiver, in particular with a bandwidth of 1.5MHz to 30MHz.

13. Channel monitoring system according to any of the preceding claims, wherein at least one channel monitoring device (102) is part of the radio device (104).

14. Channel monitoring system according to any of the preceding claims, wherein the channel monitoring system (100) comprises a plurality of channel monitoring devices (102) which are assigned and coupled one single radio device (104), wherein the plurality of channel monitoring devices (102) are preferably configured to receive RF signals having different bandwidths.

15. A method of a channel monitoring, the method comprising:
providing (S11) at least one channel monitoring device (102) comprising an input terminal for receiving a RF signal;
monitoring (S12), by the channel monitoring device (102), simultaneously a plurality of channels of the received RF signal that are existing in a target frequency range;
detecting (S13), by the channel monitoring device (102), incoming signal on at least one target channel in the target frequency range;
generating (S14), by the channel monitoring device (102), a control signal indicating the at least one target channel when the incoming signal is detected;
providing (S15) at least one radio device (104) which is coupled to the channel monitoring device (102);
receiving (S16), by the radio device (104), via its input terminal the control signal generated by the channel monitoring device (102) using a software radio protocol; and
listening (S17), by the radio device (104), to the at least one indicated target channel to receive subsequent signal of the incoming signal, when the control signal is received.

## Patentansprüche

1. Kanalüberwachungssystem (100), wobei das Kanalüberwachungssystem (100) umfasst:
mindestens eine Kanalüberwachungsvorrichtung (102), umfassend einen Eingangsanschluss zum Empfangen eines HF-Signals, wobei die Kanalüberwachungsvorrichtung (102) konfiguriert ist, um das HF-Signal zu empfangen, gleichzeitig eine Vielzahl von Kanälen des empfangenen HF-Signals, die in einem Zielfrequenzbereich vorhanden sind, zu überwachen, ein eingehendes Signal auf mindestens einem Zielkanal im Zielfrequenzbereich zu erkennen und ein Steuersignal, das den mindestens einen Zielkanal angibt, wenn das eingehende Signal erkannt wird, zu erzeugen; und
mindestens eine Funkvorrichtung (104), die mit der Kanalüberwachungsvorrichtung (102) gekoppelt ist, wobei die mindestens eine Funkvorrichtung (104) konfiguriert ist, um über ihren Eingangsanschluss das durch die mindestens eine Kanalüberwachungsvorrichtung (102) erzeugte Steuersignal zu empfangen und den mindestens einen angegebenen Zielkanal abzuhören, um nachfolgende HF-Signale des eingehenden Signals zu empfangen, wenn das Steuersignal empfangen wird,
wobei eine Übertragungsschnittstelle zum Verbinden der mindestens einen Kanalüberwachungsvorrichtung (102) mit der mindestens einen Funkvorrichtung (104), die konfiguriert ist, um das Steuersignal unter Verwendung eines Softwarefunkprotokolls an die Funkvorrichtung (104) zu übertragen.

2. Kanalüberwachungssystem nach Anspruch 1, wobei es sich bei der mindestens einen Kanalüberwachungsvorrichtung (102) um einen MF- und/oder HF-Frequenzempfänger, insbesondere mit einer Bandbreite von 1,5 MHz bis 30 MHz, handelt.

3. Kanalüberwachungssystem nach einem der vorhergehenden Ansprüche, wobei mindestens eine Kanalüberwachungsvorrichtung (102) Teil der Funkvorrichtung (104) ist.

4. Kanalüberwachungssystem nach einem der vorhergehenden Ansprüche, wobei das Kanalüberwachungssystem (100) eine Vielzahl von Kanalüberwachungsvorrichtungen (102), die einer einzigen Funkvorrichtung (104) zugewiesen und mit dieser gekoppelt sind, umfasst, wobei die Vielzahl von Kanalüberwachungsvorrichtungen (102) vorzugsweise konfiguriert ist, um HF-Signale mit unterschiedlichen Bandbreiten zu empfangen.

5. Kanalüberwachungssystem nach einem der vorhergehenden Ansprüche, wobei das eingehende Signal eine Präambel einschließt, die Synchronisationsinformationen einschließt, und wobei das Steuersignal die Präambel einschließt.

6. Kanalüberwachungssystem nach Anspruch 5, wobei die Funkvorrichtung (104) ferner konfiguriert ist, um beim Empfangen der nachfolgenden Signale die in der Präambel eingeschlossenen Synchronisationsinformationen zu extrahieren.

7. Kanalüberwachungssystem nach einem der vorhergehenden Ansprüche, wobei die Funkvorrichtung (104) ferner konfiguriert ist, um ausgehende Signale basierend auf den Synchronisationsinformationen an ein Netzwerk zu übertragen.

8. Kanalüberwachungssystem nach einem der vorhergehenden Ansprüche, wobei eine Bandbreite des Zielfrequenzbereichs zwischen 1,5 MHz und 30 MHz liegt und/oder wobei der Zielfrequenzbereich innerhalb eines HF-Frequenzbereichs definiert ist.

9. Kanalüberwachungssystem nach einem der vorhergehenden Ansprüche, wobei die mindestens eine Kanalüberwachungsvorrichtung (102) eine digitale I/Q-Schnittstelle zur Kommunikation mit der mindestens einen Funkvorrichtung (104) einschließt.

10. Kanalüberwachungssystem nach einem der vorhergehenden Ansprüche, wobei die Funkvorrichtung (104) ferner konfiguriert ist, um eine Verbindung zu einem Netzwerk herzustellen, bevor die Kanalüberwachungsvorrichtung (102) mit der Überwachung des Zielfrequenzbereichs beginnt.

11. Kanalüberwachungssystem (100), wobei das Kanalüberwachungssystem (100) umfasst:
mindestens eine Kanalüberwachungsvorrichtung (102), umfassend einen Eingangsanschluss zum Empfangen eines HF-Signals, wobei die Kanalüberwachungsvorrichtung (102) konfiguriert ist, um das HF-Signal zu empfangen, gleichzeitig eine Vielzahl von Kanälen des empfangenen HF-Signals, die in einem Zielfrequenzbereich vorhanden sind, zu überwachen, ein eingehendes Signal auf mindestens einem Zielkanal im Zielfrequenzbereich zu empfangen und ein Datenpaket zu erzeugen, um das eingehende Signal zu liefern, wenn das eingehende Signal erkannt wird; und
eine Funkvorrichtung (104), die mit der Kanalüberwachungsvorrichtung (102) gekoppelt ist, wobei die Funkvorrichtung (104) konfiguriert ist, um über ihren Eingangsanschluss das Datenpaket zu empfangen und das im Datenpaket eingeschlossene Eingangssignal zu extrahieren, wenn das Datenpaket empfangen wird,
wobei eine Übertragungsschnittstelle zum Verbinden der mindestens einen Kanalüberwachungsvorrichtung (102) mit der mindestens einen Funkvorrichtung (104), die konfiguriert ist, um das Datenpaket unter Verwendung eines Softwarefunkprotokolls an die Funkvorrichtung zu übertragen.

12. Kanalüberwachungssystem nach Anspruch 11, wobei es sich bei der mindestens einen Kanalüberwachungsvorrichtung um einen MF- und/oder HF-Frequenzempfänger, insbesondere mit einer Bandbreite von 1,5 MHz bis 30 MHz, handelt.

13. Kanalüberwachungssystem nach einem der vorhergehenden Ansprüche, wobei mindestens eine Kanalüberwachungsvorrichtung (102) Teil der Funkvorrichtung (104) ist.

14. Kanalüberwachungssystem nach einem der vorhergehenden Ansprüche, wobei das Kanalüberwachungssystem (100) eine Vielzahl von Kanalüberwachungsvorrichtungen (102), die einer einzigen Funkvorrichtung (104) zugewiesen und mit dieser gekoppelt sind, umfasst, wobei die Vielzahl von Kanalüberwachungsvorrichtungen (102) vorzugsweise konfiguriert ist, um HF-Signale mit unterschiedlichen Bandbreiten zu empfangen.

15. Verfahren zur Kanalüberwachung, wobei das Verfahren umfasst:
Bereitstellen (S11) mindestens einer Kanalüberwachungsvorrichtung (102), umfassend einen Eingangsanschluss zum Empfangen eines HF-Signals;
gleichzeitiges Überwachen (S12), durch die Kanalüberwachungsvorrichtung (102), einer Vielzahl von Kanälen des empfangenen HF-Signals, die in einem Zielfrequenzbereich vorhanden sind;
Erkennen (S13), durch die Kanalüberwachungsvorrichtung (102), eines eingehenden Signals auf mindestens einem Zielkanal im Zielfrequenzbereich;
Erzeugen (S14), durch die Kanalüberwachungsvorrichtung (102), eines Steuersignals, das den mindestens einen Zielkanal angibt, wenn das eingehende Signal erkannt wird;
Bereitstellen (S15) mindestens einer Funkvorrichtung (104), die mit der Kanalüberwachungsvorrichtung (102) gekoppelt ist;
Empfangen (S16), durch die Funkvorrichtung (104) über ihren Eingangsanschluss, des durch die Kanalüberwachungsvorrichtung (102) erzeugten Steuersignals unter Verwendung eines Softwarefunkprotokolls und
Abhören (S17), durch die Funkvorrichtung (104), des mindestens einen angegebenen Zielkanals, um das nachfolgende Signal des eingehenden Signals zu empfangen, wenn das Steuersignal empfangen wird.

## Revendications

1. Système de surveillance de canal (100), le système de surveillance de canal (100) comprenant :
au moins un dispositif de surveillance de canal (102) comprenant un terminal d'entrée pour recevoir un signal RF dans lequel le dispositif de surveillance de canal (102) est configuré pour recevoir le signal RF, pour surveiller simultanément une pluralité de canaux du signal RF reçu qui existent dans une gamme de fréquences cible, pour détecter un signal entrant sur au moins un canal cible dans la gamme de fréquences cible et pour générer un signal de commande indiquant l'au moins un canal cible lorsque le signal entrant est détecté ; et
au moins un dispositif radio (104) qui est couplé au dispositif de surveillance de canal (102), dans lequel l'au moins un dispositif radio (104) est configuré pour recevoir, par l'intermédiaire de son terminal d'entrée, le signal de commande généré par l'au moins un dispositif de surveillance de canal (102) et pour écouter l'au moins un canal cible indiqué afin de recevoir des signaux RF ultérieurs du signal entrant, lorsque le signal de commande est reçu,
dans lequel une interface de transmission pour connecter l'au moins un dispositif de surveillance de canal (102) avec l'au moins un dispositif radio (104) qui est configuré pour transmettre le signal de commande au dispositif radio (104) à l'aide d'un protocole radio logiciel.

2. Système de surveillance de canal selon la revendication 1, dans lequel l'au moins un dispositif de surveillance de canal (102) est un récepteur de fréquence MF et/ou HF, en particulier avec une largeur de bande de 1,5 MHz à 30 MHz.

3. Système de surveillance de canal selon l'une quelconque des revendications précédentes, dans lequel au moins un dispositif de surveillance de canal (102) fait partie du dispositif radio (104).

4. Système de surveillance de canal selon l'une quelconque des revendications précédentes, dans lequel le système de surveillance de canal (100) comprend une pluralité de dispositifs de surveillance de canal (102) qui sont attribués et couplés à un seul dispositif radio (104), dans lequel la pluralité de dispositifs de surveillance de canal (102) sont de préférence configurés pour recevoir des signaux RF ayant des largeurs de bande différentes.

5. Système de surveillance de canal selon l'une quelconque des revendications précédentes, dans lequel le signal entrant comporte un préambule qui comporte des informations de synchronisation, et dans lequel le signal de commande comporte le préambule.

6. Système de surveillance de canal selon la revendication 5, dans lequel le dispositif radio (104) est en outre configuré pour extraire les informations de synchronisation incluses dans le préambule tout en recevant les signaux ultérieurs.

7. Système de surveillance de canal selon l'une quelconque des revendications précédentes, dans lequel le dispositif radio (104) est en outre configuré pour transmettre des signaux sortants à un réseau sur la base des informations de synchronisation.

8. Système de surveillance de canal selon l'une quelconque des revendications précédentes, dans lequel une largeur de bande de la gamme de fréquences cible est comprise entre 1,5 MHz et 30 MHz et/ou dans lequel la gamme de fréquences cible est définie au sein d'une gamme de fréquences HF.

9. Système de surveillance de canal selon l'une quelconque des revendications précédentes, dans lequel l'au moins un dispositif de surveillance de canal (102) comporte une interface numérique I/Q pour une communication avec l'au moins un dispositif radio (104).

10. Système de surveillance de canal selon l'une quelconque des revendications précédentes, dans lequel le dispositif radio (104) est en outre configuré pour établir une connexion avec un réseau avant que le dispositif de surveillance de canal (102) ne commence à surveiller la gamme de fréquences cible.

11. Système de surveillance de canal (100), le système de surveillance de canal (100) comprenant :
au moins un dispositif de surveillance de canal (102) comprenant un terminal d'entrée pour recevoir un signal RF dans lequel le dispositif de surveillance de canal (102) est configuré pour recevoir le signal RF, pour surveiller simultanément une pluralité de canaux du signal RF reçu qui existent dans une gamme de fréquences cible, pour recevoir un signal entrant sur au moins un canal cible dans la gamme de fréquences cible, et pour générer un paquet de données pour délivrer le signal entrant lorsque le signal entrant est détecté ; et
un dispositif radio (104) couplé au dispositif de surveillance de canal (102), dans lequel le dispositif radio (104) est configuré pour recevoir, par l'intermédiaire de son terminal d'entrée, le paquet de données, et pour extraire le signal entrant inclus dans le paquet de données lorsque le paquet de données est reçu,
dans lequel une interface de transmission pour connecter l'au moins un dispositif de surveillance de canal (102) avec l'au moins un dispositif radio (104) qui est configuré pour transmettre le paquet de données au dispositif radio à l'aide d'un protocole radio logiciel.

12. Système de surveillance de canal selon la revendication 11, dans lequel l'au moins un dispositif de surveillance de canal est un récepteur de fréquence MF et/ou HF, en particulier avec une largeur de bande de 1,5 MHz à 30 MHz.

13. Système de surveillance de canal selon l'une quelconque des revendications précédentes, dans lequel au moins un dispositif de surveillance de canal (102) fait partie du dispositif radio (104).

14. Système de surveillance de canal selon l'une quelconque des revendications précédentes, dans lequel le système de surveillance de canal (100) comprend une pluralité de dispositifs de surveillance de canal (102) qui sont attribués et couplés à un seul dispositif radio (104), dans lequel la pluralité de dispositifs de surveillance de canal (102) sont de préférence configurés pour recevoir des signaux RF ayant des largeurs de bande différentes.

15. Procédé de surveillance de canal, le procédé comprenant :
la fourniture (S11) d'au moins un dispositif de surveillance de canal (102) comprenant un terminal d'entrée pour recevoir un signal RF ;
la surveillance (S12), par le dispositif de surveillance de canal (102), simultanément, d'une pluralité de canaux du signal RF reçu qui existent dans une gamme de fréquences cible ;
la détection (S13), par le dispositif de surveillance de canal (102), d'un signal entrant sur au moins un canal cible dans la gamme de fréquences cible ;
la génération (S14), par le dispositif de surveillance de canal (102), d'un signal de commande indiquant l'au moins un canal cible lorsque le signal entrant est détecté ;
la fourniture (S15) d'au moins un dispositif radio (104) qui est couplé au dispositif de surveillance de canal (102) ;
la réception (S16), par le dispositif radio (104), par l'intermédiaire de son terminal d'entrée, du signal de commande généré par le dispositif de surveillance de canal (102) à l'aide d'un protocole radio logiciel ; et
l'écoute (S17), par le dispositif radio (104), de l'au moins un canal cible indiqué pour recevoir un signal ultérieur du signal entrant, lorsque le signal de commande est reçu.
